# FASCICULE DE BREVET EUROPEEN

(11) **EP 3 013 618 B1**
(45) Date de publication et mention de la délivrance du brevet: **08.08.2018**
(21) Numéro de dépôt: 14817849.4
(22) Date de dépôt: 19.05.2014
(51) Int. Cl.: B60K 6/36, B60K 6/442, B60K 6/48, B60W 10/113, B60W 20/00, B60K 6/547, F16H 3/08, F16H 3/00

(54) **TRANSMISSION HYBRIDE AVEC UNE MACHINE ELECTRIQUE ADDITIONNELLE**
HYBRIDANTRIEB MIT ZUSÄTZLICHER ELEKTRISCHER MASCHINE
HYBRID TRANSMISSION WITH AN ADDITIONAL ELECTRIC MACHINE

(30) Priorité: 26.06.2013 FR 1356127
(43) Date de publication de la demande: 04.05.2016
(73) Titulaire: Renault S.A.S., 92100 Boulogne-Billancourt (FR)
(72) Inventeur: KETFI-CHERIF, Ahmed, F-78990 Elancourt (FR); NAIR, Karima, 78000 VERSAILLES (FR)
(86) Numéro de dépôt international: PCT/FR2014/051148
(87) Numéro de publication internationale: WO 2014/207332

(56) Documents cités:
- EP-A1- 1 610 038
- WO-A1-2012/131259
- DE-A1-102008 002 381
- DE-A1-102010 028 026
- DE-A1-102010 030 573

## Description

La présente invention se rapporte au domaine des transmissions hybrides.

Elle concerne une transmission hybride pour véhicule automobile muni d'un moteur thermique et d'une machine électrique d'entraînement. Une transmission hybride selon le préambule de la revendication 1 est connue du document DE 10 2010 028 026 A1. Plus précisément, cette invention a pour objet une transmission hybride comportant :
- deux arbres primaires concentriques, un premier moyen de couplage entre les deux arbres primaires pouvant occuper au moins trois positions dans lesquelles, soit le moteur thermique est découplé de la chaîne cinématique reliant la machine électrique d'entraînement aux roues, soit le moteur thermique entraîne les roues avec ou sans l'appoint de la machine électrique d'entraînement, soit le moteur thermique et la machine électrique d'entraînement sont couplés de manière à additionner leurs couples en direction des roues, et
- un arbre secondaire lié aux roues du véhicule, portant un deuxième moyen de couplage capable de lier l'un ou l'autre de deux pignons secondaires sur cet arbre.

Par la publication WO 2012/131259, on connaît une transmission hybride du type indiqué ci-dessus, permettant de disposer d'au moins deux rapports distincts en mode électrique et hybride, et d'un rapport supérieur dédié au roulage rapide en mode thermique. L'autonomie de roulage d'un véhicule hybride équipé d'une telle transmission, dépend des performances attendues du véhicule, et du dimensionnement de ses composants, y compris de la machine électrique.

Le dimensionnement des machines électriques ou des batteries d'un véhicule hybride, impacte directement la masse globale du véhicule. Il est dicté par des contraintes d'implantation et de coût, notamment lorsque la machine électrique doit fonctionner en générateur pour permettre de recharger la batterie de traction à l'arrêt.

La présente invention vise à augmenter l'autonomie d'un véhicule hybride, dont la transmission comporte deux arbres primaires concentriques reliés à un moteur thermique et à une machine électrique d'entraînement, portant chacun au moins un pignon de descente sur un arbre secondaire relié aux roues du véhicule.

Dans ce but, la transmission comporte un arbre supplémentaire lié à une machine électrique additionnelle, capable de fournir un couple moteur ou un couple résistant à la transmission. L' arbre supplémentaire porte deux pignons de descente sur les arbres primaires, et un troisième moyen de couplage permettant de lier en rotation l'un ou l'autre de ces pignons de descente avec l'arbre supplémentaire.

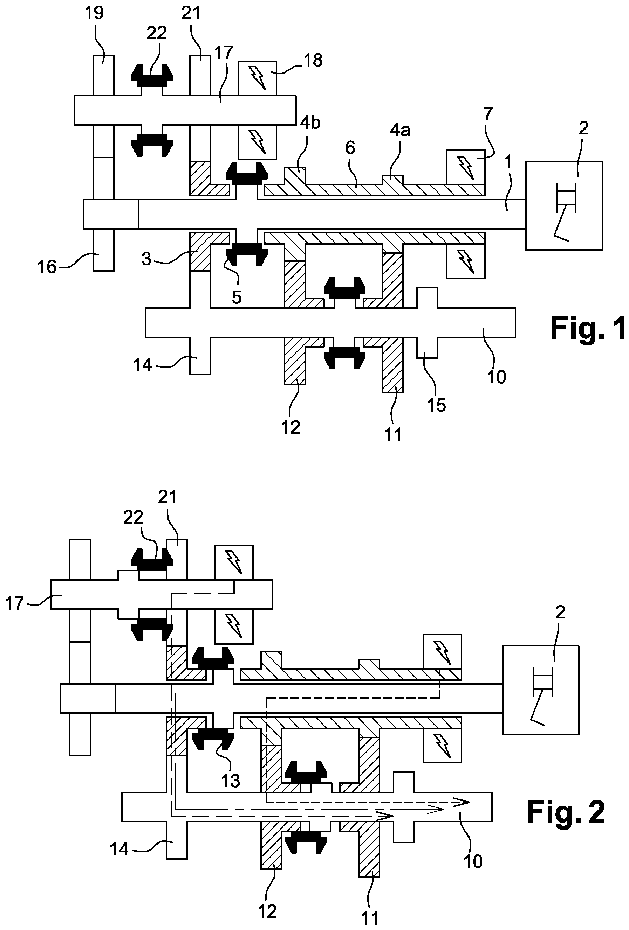

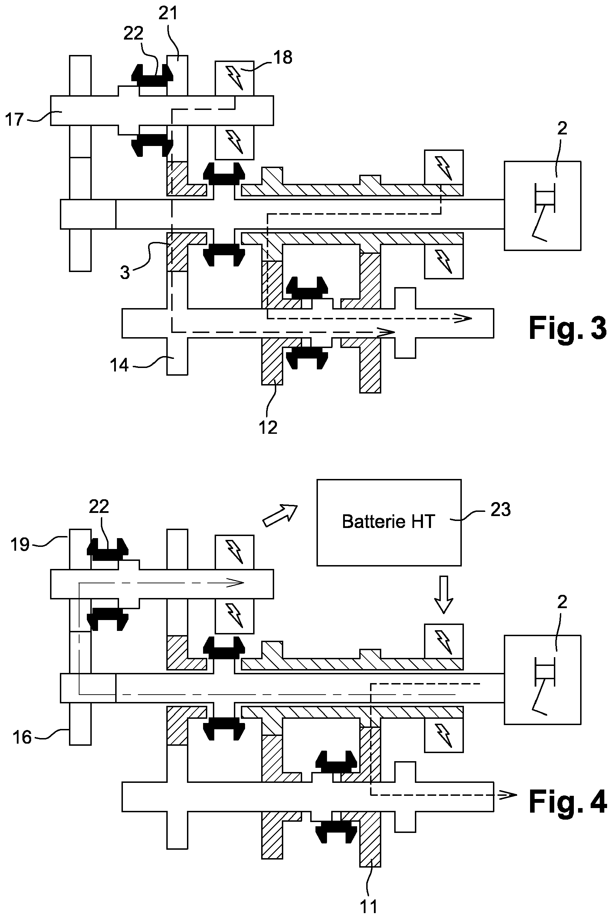

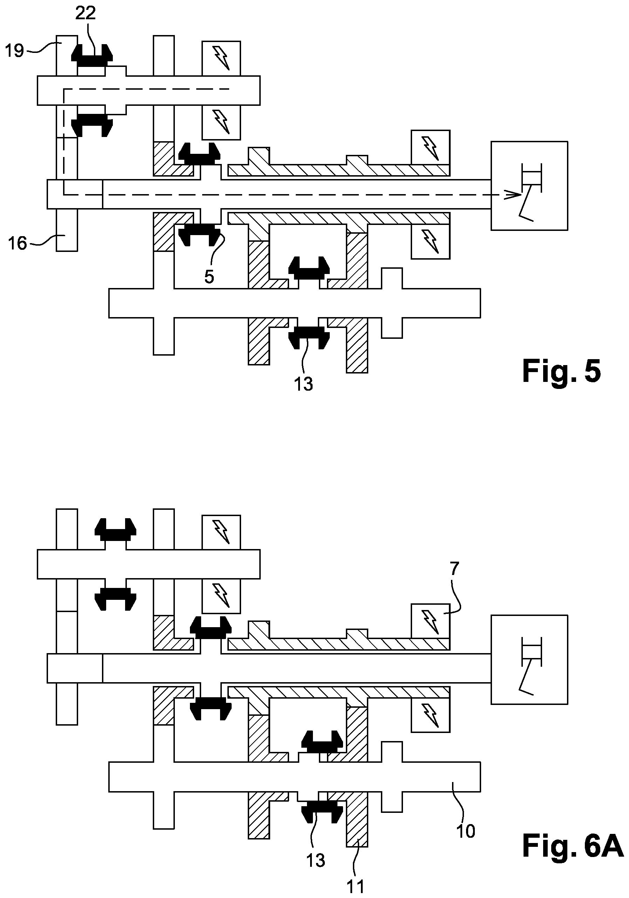

La présente invention sera mieux comprise à la lecture de la description suivante d'u mode de réalisation non limitatif de celle-ci, en se reportant aux dessins annexés, sur lesquels une transmission hybride est représentée :
- au point mort sur la figure 1,
- en mode hybride avec « boost » sur son rapport long sur la figure 2,
- en mode électrique avec « boost », sur son rapport intermédiaire sur la figure 3
- en mode électrique sur le rapport court, avec recharge simultanée de la batterie sur la figure 4,
- en situation de démarrage du moteur thermique sur le rapport long, sur la figure 5,
- en transition du rapport court que le rapport intermédiaire en mode électrique sur les figures 6A à 6E, et

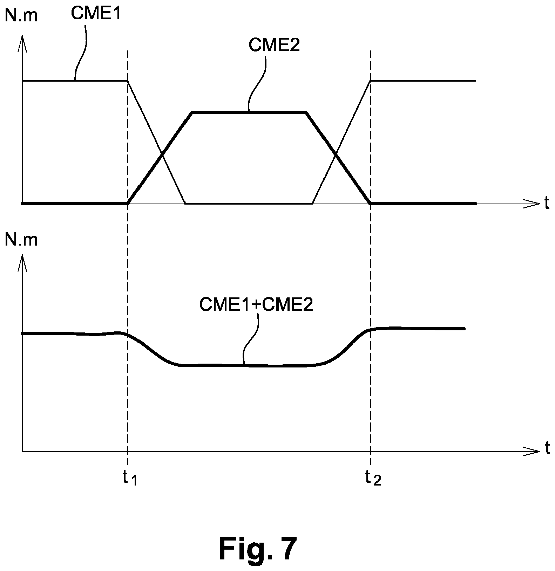

- la figure 7 montre la variation du couple transmis aux roues, au cours d'un changement de rapport.

La transmission illustrée par les figures comporte un arbre primaire plein 1, connecté directement par l'intermédiaire d'un système de filtration (moyeu amortisseur, « damper », double volant ou autre) au volant d'inertie d'un moteur thermique 2. L'arbre plein 1 porte un pignon fou 3, pouvant être connecté avec celui-ci par un premier système de couplage 5 (crabot, synchroniseur, ou autre type de coupleur progressif ou non). Un arbre primaire creux 6, est relié au rotor d'une première machine électrique, ou machine électrique d'entraînement 7. L'arbre creux 6 peut être relié à l'arbre primaire plein 1 par intermédiaire du système de couplage 5. Un arbre secondaire 10 porte deux pignons fous 11 et 12. Un deuxième système de couplage 13 (crabot, synchroniseur, ou autre type de coupleur progressif ou non), permet de relier les pignons fous 11, 12 à l'arbre primaire creux 6. L'arbre secondaire 10 porte également un pignon fixe 14 et un pignon de descente 15 vers un différentiel (non représenté) relié aux roues du véhicule. Enfin, l'arbre primaire 1 porte une denture fixe 16, liée à un arbre supplémentaire 17.

Les deux arbres primaires 1, 6 sont concentriques. Le premier moyen de couplage 5 peut occuper au moins trois positions, dans lesquelles :
- le moteur thermique est découplé de la chaîne cinématique reliant la machine électrique 7 aux roues (position 1),
- le moteur thermique entraîne les roues avec ou sans l'appoint de la machine électrique (position 2), et
- le moteur thermique et la machine électrique 7 sont couplés de manière à additionner en direction des roues leurs couples respectifs (position 3).

L'arbre secondaire 10, lié aux roues du véhicule, porte un deuxième moyen de couplage 13 qui peut occuper trois positions, dans les quelles, l'un des deux pignons secondaires 11, 12, ou aucun d'entre eux, est lié à l'arbre secondaire 10. Sans tenir compte de cette dernière, les trois positions du premier moyen de couplage 5, et l'intervention combinée du deuxième moyen de couplage 13, assurent à la transmission trois rapports : un rapport court et un rapport intermédiaire en mode électrique, trois rapport en mode hybride, et un rapport long en mode thermique.

L'arbre supplémentaire 17 est lié mécaniquement à une deuxième machine électrique, ou machine additionnelle 18, capable de fournir un couple moteur ou un couple résistant à la transmission. Il porte deux pignons fous 19, 21, de descente, engrenant respectivement avec une denture fixe 16 de l'arbre primaire 1 et son pignon fou 3. Le premier pignon de descente 21 entraîne un pignon secondaire 14 par l'intermédiaire du pignon fou 3 de l'arbre primaire plein 1. Il assure la transmission du couple de la machine additionnelle 18, en direction de l'arbre secondaire 10. Un deuxième pignon de descente 19 assure la transmission du couple entre la machine additionnelle 18 et l'arbre primaire plein 1. L'arbre supplémentaire 17 porte un troisième moyen de couplage 22 permettant de lier en rotation l'un ou l'autre des pignons de descente 19, 21, avec l'arbre supplémentaire. Il peut occuper trois positions, dont une position neutre, et deux positions d'engagement, dans lesquelles l'un des deux pignons fous 19, 21 est lié à l'arbre supplémentaire 17, ou aucun d'eux. Au neutre (cf. figure 1), la machine électrique 18 est déconnectée de la transmission. Dans la position de droite du troisième coupleur 22 sur les schémas (cf. figures 2, et 3), elle fournit un couple qui s'applique directement à l'arbre secondaire 10, relié à la roue. Dans sa position de gauche du coupleur 22 (cf. figures 4 et 5), elle fournit un couple additionnel au moteur thermique et peut aussi servir à le démarrer plus vite.

Sur la figure 2, la transmission est en mode hybride : le premier coupleur 5 est en position (2), où le moteur thermique 2 est couplé aux roues. Le deuxième coupleur 13 lie le pignon 12 à l'arbre 10. Le troisième coupleur 22 lie le pignon 21 à l'arbre supplémentaire 22. La deuxième machine 18 fournit un couple additionnel. La transmission est en mode hybride sur le rapport long, dit « autoroute », avec addition des couples du moteur thermique 2 et des deux machines électriques 7, 18. La deuxième machine électrique 18 permet alors de bénéficier d'un surplus d'énergie, ou « boost » sur ce rapport, ou d'optimiser l'utilisation de l'énergie électrique, par une répartition optimale du couple entre les deux machines électriques.

Sur la figure 3, la transmission est en mode électrique. Le premier coupleur 5 est au neutre (position 0). Le deuxième coupleur 13 lie le pignon 12 à l'arbre 10. Le troisième coupleur 22 lie le pignon 21 à l'arbre supplémentaire 17. La transmission est en mode électrique sur le rapport intermédiaire, ou « route », avec « boost » électrique. Le rapport court électrique, ou les rapports court et intermédiaire hybrides peuvent aussi bénéficier du « boost » de la machine additionnelle 18. Le couple de la machine électrique additionnelle 18 peut ainsi s'ajouter à celui de la machine d'entraînement 7 sur tous les rapports des modes hybrides ou électriques de la transmission.

La figure 4 montre une autre utilisation de la deuxième machine 18, pour recharger la batterie 23, dans un mode de recharge. Le premier coupleur 5 est au neutre (position 0). Le deuxième coupleur 13 lie le pignon 11 à l'arbre secondaire. Le troisième coupleur est en position gauche sur le schéma, où il lie l'arbre primaire plein 1 à l'arbre supplémentaire 17 par les pignons 16 et 19. La deuxième machine électrique 18 permet de transformer le mode recharge en mode hybride série permettant un roulage avec une autonomie augmentée dans le cas d'une batterie de traction vide. Le moteur thermique 2 est connecté à la machine additionnelle 18. La batterie 23 est rechargée par cette machine, fonctionnant en générateur. Un des avantages de l'architecture proposée apparaît ainsi dans la possibilité d'utiliser la première machine électrique 7 pour entraîner le véhicule, tandis que la machine additionnelle 22, entraînée par le moteur thermique 2, fonctionne en générateur. Il est alors possible de placer la transmission sur des points de rendements intéressants pour le moteur thermique (par exemple à exemple 2000 tours par minute, et de faire tourner les roues à très faible vitesse, puisque c'est la machine électrique d'entraînement 7, qui fait tourner les roues.

La figure 5 présente un autre mode de fonctionnement. La transmission est ici en mode thermique pur sur le rapport long (premier coupleur 5 en position 1, et deuxième coupleur 13 au neutre). Le troisième coupleur 22 est en position gauche, où il lie l'arbre supplémentaire 17 au primaire plein 1 par les pignons 19 et 16. Le couple de la machine additionnelle 18 est envoyé sur le moteur thermique 2 pour le démarrer. Le couple de la machine électrique additionnelle 18, permet de faire un démarrage ultra rapide du moteur thermique, notamment en roulage.

Les mesures proposées offrent d'autres possibilités de fonctionnement aux transmissions hybrides concernées. Elles permettent notamment de réaliser des passages sous couple lors des transitions entre les rapports en mode électrique ou hybride. On gagne ainsi en agrément. Cet intérêt est mis en évidence sur un exemple par les figures 6A à 6E, illustrant le cas d'un passage entre du mode dit « électrique ville » au mode dit « électrique route ».

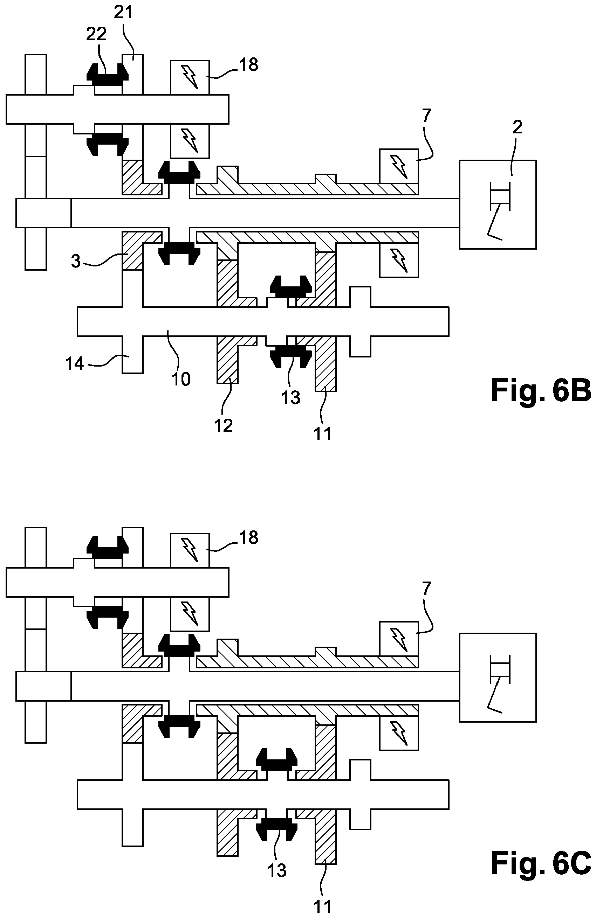

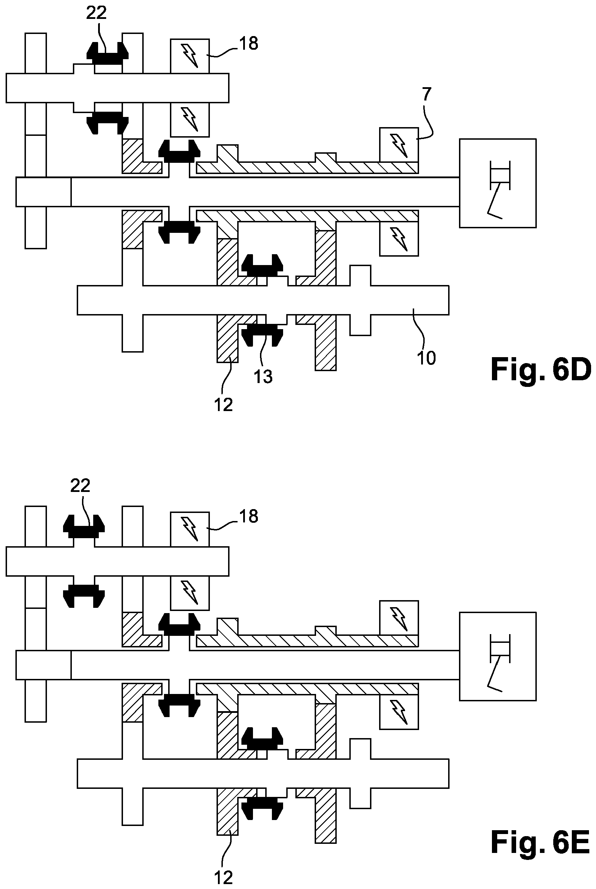

Sur la figure 6A, seul le deuxième coupleur 13 est fermé, liant l'arbre primaire creux 10 au pignon secondaire de premier rapport 11. La transmission est sur le rapport court en mode électrique. Sur la figure 6B, la machine électrique additionnelle 22 intervient, grâce au couplage de l'arbre supplémentaire 17 avec l'arbre secondaire par le troisième coupleur 22 en position de droite. La descente de pignons 21, 3 et 14 est utilisée. Le deuxième coupleur 13 peut alors être mis au neutre (figure 6C), puis passé à gauche pour lier le pignon secondaire de rapport intermédiaire 12, à l'arbre 10 (figure 6D) en bénéficiant toujours du couple de la machine additionnelle 18, avant de déconnecter celle-ci (figure 6E). La perte de couple liée à la déconnexion temporaire de la machine électrique d'entraînement 7 pendant la transition, est compensée par la machine additionnelle 18. L'assistance de la machine additionnelle 18 peut bénéficier, dans des conditions analogues, à la transition inverse (passage du rapport intermédiaire au rapport court en mode électrique), ou aux passages entre les modes hybrides court et intermédiaire.

La figure 7 illustre l'évolution du couple global pendant cette transition. On y voit comment le couple CME2 de la machine additionnelle 18 vient compenser l'interruption temporaire du couple CME1 fourni par la machine d'entraînement 7, pendant la période de transition (t1, t2) correspondant permettant au deuxième coupleur 13.

## Revendications

1. Transmission hybride pour véhicule automobile muni d'un moteur thermique (1) et d'une machine électrique d'entraînement (7), comportant :
- deux arbres primaires concentriques (1, 6), un premier moyen de couplage (5) entre les deux arbres primaires (1, 6) pouvant occuper au moins trois positions dans lesquelles le moteur thermique (1) est découplé de la chaîne cinématique reliant la machine électrique d'entraînement (7) aux roues, le moteur thermique (1) entraîne les roues avec ou sans l'appoint de la machine électrique d'entraînement (7), et le moteur thermique (1) et la machine électrique d'entraînement (7) sont couplés de manière à additionner leurs couples en direction des roues,
- un arbre secondaire (10) lié aux roues du véhicule, portant un deuxième moyen de couplage (13) capable de lier l'un ou l'autre de deux pignons secondaires (11, 12) sur cet arbre, et
- -un arbre supplémentaire (17) lié à une machine électrique additionnelle (18) capable de fournir un couple moteur ou un couple résistant à la transmission,
**caractérisée en ce que** l'arbre supplémentaire (7) porte deux pignons de descente (19, 21) sur les arbres primaires (1, 6), et un troisième moyen de couplage (22) permettant de lier en rotation l'un ou l'autre de ces pignons de descente (19, 21) avec l'arbre supplémentaire (17).

2. Transmission hybride selon la revendication 1, **caractérisée en ce qu'**un premier pignon de descente (21) assure la transmission du couple de la machine électrique (18) additionnelle en direction de l'arbre secondaire (10).

3. Transmission hybride selon la revendication 2, **caractérisée en ce que** le premier pignon de descente (21) entraîne un pignon secondaire (14) par l'intermédiaire d'un pignon (3) tournant fou sur un arbre primaire plein (1).

4. Transmission hybride selon la revendication 1, 2 ou 3, **caractérisée en ce qu'**un deuxième pignon de descente assure la transmission du couple entre la machine électrique additionnelle (18) et l'arbre primaire plein (1) lié au moteur thermique (2).

5. Transmission hybride selon l'une des revendications précédentes, **caractérisée en ce que** le couple de la machine électrique additionnelle (18) s'ajoute à celui de la machine d'entraînement (7), sur tous les rapports des modes hybrides ou électriques de la transmission.

6. Transmission hybride selon l'une des revendications précédentes, **caractérisée en ce que** la machine électrique additionnelle (18) fonctionne en générateur pour transformer l'énergie motrice du moteur thermique (2) en énergie électrique pour recharger la batterie (23) du véhicule.

7. Transmission hybride selon l'une des revendications précédentes, **caractérisée en ce que** le couple de la machine électrique additionnelle (22) est utilisé pour démarrer le moteur thermique (2), notamment en roulage.

8. Transmission hybride selon l'une des revendications précédentes, **caractérisée en ce que** la machine électrique additionnelle (18) est utilisé pour compenser l'interruption du couple de la machine électrique d'entraînement (7) lors des transitions de rapports en modes électrique et hybride.

## Patentansprüche

1. Hybridgetriebe für ein mit einem Verbrennungsmotor (1) und einer elektrischen Antriebsmaschine (7) ausgestattetes Kraftfahrzeug, welches umfasst:
- zwei konzentrische Hauptwellen (1, 6), wobei ein erstes Mittel zur Kopplung (5) zwischen den zwei Hauptwellen (1, 6) wenigstens drei Positionen einnehmen kann, in denen der Verbrennungsmotor (1) von dem Antriebsstrang, der die elektrische Antriebsmaschine (7) mit den Rädern verbindet, entkoppelt ist, der Verbrennungsmotor (1) die Räder mit oder ohne Unterstützung der elektrischen Antriebsmaschine (7) antreibt bzw. der Verbrennungsmotor (1) und die elektrische Antriebsmaschine (7) derart gekoppelt sind, dass ihre Drehmomente in Richtung der Räder addiert werden,
- eine mit den Rädern des Fahrzeugs verbundene Nebenwelle (10), die ein zweites Kopplungsmittel (13) trägt, das in der Lage ist, das eine oder das andere von zwei Sekundärritzeln (11, 12) auf dieser Welle zu verbinden,
- eine zusätzliche Welle (17), die mit einer zusätzlichen elektrischen Maschine (18) verbunden ist, die in der Lage ist, dem Getriebe ein Antriebsmoment oder ein Widerstandsmoment zu liefern,
**dadurch gekennzeichnet, dass** die zusätzliche Welle (7) zwei Ritzel zum Abtrieb (19, 21) auf die Hauptwellen (1, 6) und ein drittes Kopplungsmittel (22), welches ermöglicht, das eine oder das andere dieser Abtriebsritzel (19, 21) drehfest mit der zusätzlichen Welle (17) zu verbinden, trägt.

2. Hybridgetriebe nach Anspruch 1, **dadurch gekennzeichnet, dass** das erste Abtriebsritzel (21) die Übertragung des Drehmoments der zusätzlichen elektrischen Maschine (18) 1n Richtung der Nebenwelle (10) sicherstellt.

3. Hybridgetriebe nach Anspruch 2, **dadurch gekennzeichnet, dass** das erste Abtriebsritzel (21) ein Sekundärritzel (14) über ein Ritzel (3) antreibt, das sich frei auf einer massiven Hauptwelle (1) dreht.

4. Hybridgetriebe nach Anspruch 1, 2 oder 3, **dadurch gekennzeichnet, dass** ein zweites Abtriebsritzel die Übertragung des Drehmoments zwischen der zusätzlichen elektrischen Maschine (18) und der mit dem Verbrennungsmotor (2) verbundenen massiven Hauptwelle (1) sicherstellt.

5. Hybridgetriebe nach einem der vorhergehenden Ansprüche, **dadurch gekennzeichnet, dass** das Drehmoment der zusätzlichen elektrischen Maschine (18) in allen Gängen der hybriden oder elektrischen Betriebsarten des Getriebes zu demjenigen der Antriebsmaschine (7) addiert wird.

6. Hybridgetriebe nach einem der vorhergehenden Ansprüche, **dadurch gekennzeichnet, dass** die zusätzliche elektrische Maschine (18) als Generator arbeitet, um die Antriebsenergie des Verbrennungsmotors (2) in elektrische Energie zum Aufladen der Batterie (23) des Fahrzeugs umzuwandeln.

7. Hybridgetriebe nach einem der vorhergehenden Ansprüche, **dadurch gekennzeichnet, dass** das Drehmoment der zusätzlichen elektrischen Maschine (22) verwendet wird, um den Verbrennungsmotor (2) zu starten, insbesondere während der Fahrt.

8. Hybridgetriebe nach einem der vorhergehenden Ansprüche, **dadurch gekennzeichnet, dass** die zusätzliche elektrische Maschine (18) verwendet wird, um die Unterbrechung des Drehmoments der elektrischen Antriebsmaschine (7) während der Gangwechsel in der elektrischen und der Hybridbetriebsart zu kompensieren.

## Claims

1. Hybrid transmission for a motor vehicle provided with a heat engine (1) and an electric driving machine (7), comprising:
- two concentric primary shafts (1, 6), a first coupling means (5) between the two primary shafts (1, 6) able to occupy at least three positions in which the heat engine (1) is uncoupled from the kinematic chain connecting the electric driving machine (7) to the wheels, the heat engine (1) drives the wheels with or without extra contribution from the electric driving machine (7), and the heat engine (1) and the electric driving machine (7) are coupled so as to add their torques toward the wheels,
- a secondary shaft (10) connected to the wheels of the vehicle, supporting a second coupling means (13) capable of connecting either of the two secondary pinions (11, 12) on said shaft, and
- an additional shaft (17) connected to an additional electric machine (18), capable of supplying an engine torque or a resistive torque to the transmission, **characterized in that** the additional shaft (7) supports two step-down pinions (19, 21) on the primary shafts (1, 6), and a third coupling means (22) making it possible to connect in rotation either of these step-down pinions (19, 21) and the additional shaft (17).

2. Hybrid transmission according to Claim 1, **characterized in that** a first step-down pinion (21) ensures the transmission of the torque from the additional electric machine (18) toward the secondary shaft (10).

3. Hybrid transmission according to Claim 2, **characterized in that** the first step-down pinion (21) drives a secondary pinion (14) by means of an idler pinion (3) rotating on a solid primary shaft (1).

4. Hybrid transmission according to Claim 1, 2 or 3, **characterized in that** a second step-down pinion assures the transmission of the torque between the additional electric machine (18) and the solid primary shaft (1) connected to the heat engine (2).

5. Hybrid transmission according to one of the preceding claims, **characterized in that** the torque of the additional electric machine (18) is added to that of the driving machine (7) in all the gears of the hybrid or electric modes of the transmission.

6. Hybrid transmission according to one of the preceding claims, **characterized in that** the additional electric machine (18) functions as a generator in order to transform the motor energy of the heat engine (2) into electrical energy for recharging the battery (23) of the vehicle.

7. Hybrid transmission according to one of the preceding claims, **characterized in that** the torque of the additional electric machine (22) is used to start up the heat engine (2), in particular when the vehicle is traveling.

8. Hybrid transmission according to one of the preceding claims, **characterized in that** the additional electric machine (18) is used to compensate for the interruption of the torque of the electric driving machine (7) during gear transitions in electric and hybrid modes.
